# EUROPÄISCHE PATENTSCHRIFT

(11) **EP 0 764 778 B1**
(45) Veröffentlichungstag und Bekanntmachung des Hinweises auf die Patenterteilung: **25.09.2002**
(21) Anmeldenummer: 96112326.2
(22) Anmeldetag: 31.07.1996
(51) Int. Cl.: F02D 41/38, F02D 41/40

(54) **Verfahren zur Steuerung der Kraftstoffeinspritzung bei einem Dieselmotor**
Control method for the fuel injection of a diesel engine
Méthode de commande de l'injection de carburant d'un moteur diesel

(30) Priorität: 21.09.1995 DE 19535056
(43) Veröffentlichungstag der Anmeldung: 26.03.1997
(73) Patentinhaber: DaimlerChrysler AG, 70567 Stuttgart (DE)
(72) Erfinder: Schmid, Wolfram, 72622 Nürtingen (DE)

(56) Entgegenhaltungen:
- EP-A- 0 413 031
- EP-A- 0 641 925
- FR-A- 2 691 207
- US-A- 4 426 982
- US-A- 4 493 303
- US-A- 4 756 292

## Beschreibung

Die Erfindung bezieht sich auf ein Verfahren zur Steuerung der Kraftstoffeinspritzung bei einem Dieselmotor, bei dem Einspritzparameter in Abhängigkeit einer Gruppe von Eingangsgrößen eingestellt werden, die wenigstens die Motordrehzahl und den Motormomentsollwert enthält. Solche Verfahren werden heutzutage meist von elektronischen Motormanagementsystemen durchgeführt, welche zwecks Steuerung der Einspritzparameter, insbesondere des Einspritzbeginns und der Einspritzdauer, entsprechende Stellgrößeninformationen an eine Einspritzanlage liefern. Mit dem Begriff Steuerung werden vorliegend nicht nur eigentliche Steuerungsprozesse sondern auch Steuerungsvorgänge innerhalb von eigentlichen Regelungsprozessen bezeichnet. Zur Steuerung von Einspritzbeginn und Einspritzdauer werden derzeit verschiedene extern und intern gebildete Führungs- und Regelgrößen im Motormanagementsystem zu einem Algorithmus verknüpft, der als Einspritzstrategie bezeichnet wird. Der Einsatz elektronischer Motormanagementsysteme hat gegenüber konventionellen mechanischen Motorsteuerungen den Vorteil, größere Freiheiten bei der Auslegung der Einspritzstrategie zu erlauben. Ein Problempunkt bekannter Einspritzstrategien liegt darin, daß sie auf stationären Motorbetrieb optimiert sind, im instationären Betrieb jedoch nicht immer optimale Ergebnisse liefern.

Aus der Offenlegungsschrift EP 0 278 990 A1 ist ein Verfahren zur Steuerung der Kraftstoffeinspritzung bei einer luftverdichtenden Brennkraftmaschine bekannt, bei dem im Fall einer Erhöhung der Motorlast der Zeitpunkt des Förderbeginns am Spritzversteller einer Einspritzpumpe zunächst in Richtung spät verschoben und anschließend mit zeitlicher Verzögerung auf den dem erhöhten Lastzustand angepaßten, in Richtung früh liegenden Förderbeginnzeitpunkt nachgeführt wird. Ein ähnliches Verfahren, bei dem ebenfalls eine anfängliche Verschiebung des Einspritzzeitpunktes in Richtung spät und dann in Abhängigkeit von der zunehmenden Motordrehzahl oder einer anderen für die Motorbeschleunigung repräsentativen Größe auf den zum erhöhten Lastzustand gehörigen, in Richtung früh verschobenen Wert nachgeführt wird, ist in der Patentschrift US 4.346.688 beschrieben. Mit dieser Methode soll der vermehrten Geräuschentwicklung bei Lasterhöhung aufgrund verlängerten Zündverzuges durch zuvor kühlere Brennräume bei anschließend erhöhter Einspritzmenge entgegengewirkt werden.

Aus der Offenlegungsschrift DE 37 05 278 A1 ist ein Verfahren zur Kraftstoffmengenmodulation für eine Brennkraftmaschine bekannt, bei dem positive Schwellen für die erste Ableitung eines motordrehzahlabhängigen Signals vorgesehen sind, oberhalb derer die Kraftstoffmenge so moduliert wird, daß Ruckelschwingungen der Brennkraftmaschine entgegengewirkt wird.

In der Offenlegungsschrift DE 39 25 877 A1 ist ein Verfahren zur Bereitstellung eines Kraftstoffzumeßsignals bei einer Dieselbrennkraftmaschine offenbart, bei dem ausgehend von Meßgrößen wie Fahrpedalstellung, Drehzahl, Lambdawert, Abgastemperatur oder Drehmoment eine fahrpedalstellungsabhängige Vorgabe eines Kraftstoffmengenwunschs zusammen mit einem zweiten Signal, das einem von der Drehzahl abhängigen Vorsteuerkennfeld entstammt und bei bestimmten Betriebszuständen von einem Reglerausgangssignal beeinflußt wird, auf eine die Kraftstoffzumessung bestimmende Minimalauswahl gegeben wird. Die Werte des Vorsteuerkennfeldes können von der angesaugten Luftmenge abhängen, die ihrerseits ausgehend von der Ableitung der Drehzahl und der eingespritzten Kraftstoffmenge simuliert werden kann. Die Parameter des Reglers können unter anderem vom Gradient des Lambdawertes beeinflußt werden, wenn die Ableitung der Motordrehzahl größer als eine vorgegebene Schwelle ist.

In der Patentschrift US 4.690.114 ist ein Geschwindigkeitssteuersystem für einen Dieselmotor beschrieben, bei dem die als Führungsgröße für die Regelung der Kraftstoffeinspritzung vorgegebene Motorsollgeschwindigkeit unter anderem in Abhängigkeit vom zeitlichen Gradienten der Motor-Istgeschwindigkeit festgelegt wird.

In der Offenlegungsschrift EP 0 413 031 A1 ist ein Verfahren zur Steuerung der Ansaugluftmenge für einen Ottomotor zwecks Leistungssteuerung desselben beschrieben, bei dem einer Berechnungseinheit als Eingangsgrößen ein abhängig von der Fahrzeuggeschwindigkeit und der Stellung eines Fahrpedals bestimmter Momentsollwert und eine Momentenregeldifferenz zugeführt werden. Letztere wird durch Subtraktion eines anhand der gemessenen Motordrehzahl, eines Momentenkapazitätsfaktors und des Momentenverhältnisses eines Drehmomentwandlers ermittelten Momentistwertes vom Momentsollwert bestimmt. Aus dem zugeführten Momentsollwert ermittelt die Berechnungseinheit ein stationäres Ausgangsdrehmoment und daraus eine stationäre Ansaugluftmenge.

Aus der zugeführten Momentenregeldifferenz ermittelt eine Anpassungsstufe der Berechnungseinheit durch einen PID, PI- oder PD-Algorithmus einen Ansaugluftmengen-Korrekturbeitrag, der auf den ermittelten stationären Ansaugluftmengenwert zur Erzeugung eines Ansaugenluftmengen-Sollwertes aufaddiert wird. Weiter ist angegeben, dass das Verfahren auf den Fall eines Dieselmotors übertragbar sei, wobei dann anstelle der Ansaugluftmenge eine Kraftstoffeinspritzgröße treten soll.

Der Erfindung liegt als technisches Problem die Bereitstellung eines Verfahrens zur Steuerung der Kraftstoffeinspritzung bei einem Dieselmotors zugrunde, mit dem ein verbessertes Motorbetriebsverhalten insbesondere während instationärer Betriebsphasen erzielt wird.

Dieses Problem wird durch ein Verfahren mit den Merkmalen des Anspruchs 1 gelöst. Das Verfahren berücksichtigt bei der Einspritzstrategie nicht nur die herkömmlichen Eingangsgrößen, wie Drehzahl und Motormomentsollwert etc., sondern vor allem auch deren zeitliche Gradienten. Es zeigt sich, dass dadurch ein verbessertes Betriebsverhalten besonders in instationären Betriebsphasen, wie z.B. während einer Lasterhöhung, erreicht wird.

In einer Weiterbildung der Erfindung nach Anspruch 2 kann die Abhängigkeit der Einspritzbeginn- und Einspritzdauereinstellung von den zeitlichen Gradienten der Eingangsgrößen eine direkte funktionale Abhängigkeit sein oder aber in einer indirekten Beeinflussung bestehen, bei der Schwellwerte, bei deren Über- bzw. Unterschreitung eine jeweilige Änderung der Einspritzstrategie erfolgt, in Abhängigkeit von den Gradienten verändert werden.

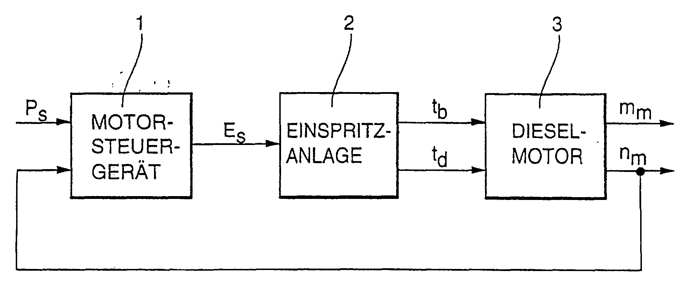

Eine bevorzugte Ausführungsform der Erfindung wird nachfolgend anhand der Zeichnung beschrieben.

Die einzige Figur zeigt ein schematisches Blockdiagramm einer Dieselmotorsteuerung.

Wie in der Figur dargestellt, erzeugt ein Motorsteuergerät (1) als Zentraleinheit eines elektronischen Motormanagementsystems in Abhängigkeit von den Eingangsgrößen Fahrpedalstellung (pₛ) und Motordrehzahl (nₘ) die erforderliche Einspritzinformation (Eₛ), mit der das Motorsteuergerät (1) eine Einspritzanlage (2) für einen Dieselmotor (3) ansteuert. Die Einspritzanlage (2) wählt anhand der zugeführten Einspritzinformation (Eₛ) den jeweils richtigen Einspritzbeginn (t_{b}) und die richtige Einspritzdauer
(t_{d}) für jeden Arbeitstakt des Dieselmotors (3), der ausgangsseitig neben der Motordrehzahl (nₘ) ein entsprechendes Motormoment (mₘ) liefert. Wie gezeigt, wird die Information über die momentane Motordrehzahl (nₘ) an die Eingangsseite des Motorsteuergerätes (1) rückgeführt.

Das Motorsteuergerät (1) bestimmt die Steuer- und Regelstrategie für den Dieselmotor (3) mittels einer Einspritzstrategie, die als Verknüpfungsgrößen nicht nur wie üblich die Motordrehzahl (nₘ) als externe Regelgröße und den Sollwert des Motormomentes (mₘ) als interne Rechengröße sowie je nach Anwendungsfall weitere herkömmlich berücksichtigte Eingangsgrößen zur Bildung eines Einspritzalgorithmus heranzieht sondern auch deren zeitliche Gradienten als interne Rechengrößen, d.h. insbesondere den Drehzahlgradient und den Motormomentsollwertgradient.

Dabei gehen in einer ersten Variante der Drehzahlgradient und der Motormomentsollwertgradient direkt in einen funktionalen Zusammenhang ein, der die Werte der Einspritzparameter, d.h. des Einspritzbeginns (t_{b}) und der Einspritzdauer (t_{d}), als Funktionen der genannten Verknüpfungsgrößen bestimmt. Derartige funktionale Zusammenhänge sind an sich bekannt und bedürfen hier keiner näheren Beschreibung, wobei sich für den Fachmann die erfindungsgemäß neue Berücksichtigung der Gradientenwerte an passender Stelle des funktionalen Zusammenhangs je nach Anwendungsfall ohne weiteres ergibt.

Als zweite Variante kann vorgesehen sein, über die jeweiligen Werte der Gradienten der Verknüpfungsgrößen für die Einspritzstrategie feste oder variable Schwellwerte zu definieren, nach deren Überschreitung für einen festen oder variablen Zeitraum Eingriffe vorgenommen werden, welche die Einspritzstrategie verändern. Bei dieser Methode beeinflussen die Gradienten der herkömmlichen Verknüpfungsgrößen die Einspritzparameter indirekt. Je nach gewählter Variante gibt das Motorsteuergerät (1) die entsprechende Einspritzinformation (Eₛ) zur geeigneten Ansteuerung der Dieselmotor-Einspritzanlage (2) ab.

Mit dieser Vorgehensweise kann der Dieselmotor (3) in seinem Betriebsverhalten einerseits stationär optimiert werden und andererseits unter Erhaltung der optimierten stationären Betriebseigenschaften auch instationär mit Hilfe der die Gradienten wenigstens der Motordrehzahl (mₘ) und des Motormomentsollwertes berücksichtigenden Einspritzstrategie optimiert werden.

Beispielhaft ermöglicht es das erfindungsgemäße Verfahren mit der die zeitlichen Gradienten von Motordrehzahl, Motormomentsollwert und gegebenenfalls weiterer Größen berücksichtigenden Einspritzstrategie bei einer Lastaufschaltung mit resultierendem positivem Drehzahlgradienten, d.h. einer Fahrzeugbeschleunigung, gegenüber den stationär ausgelegten Einspritzbeginnzeitpunkten für die durchlaufenen Drehzahlpunkte eine Verschiebung des Einspritzbeginns in Richtung früh vorzunehmen. Grundsätzlich führt dies zu einem besseren Wirkungsgrad wegen besserer Kraftstoffausnutzung und zu einer geringeren Rauchemission. Im stationären Motorbetrieb führt die Verschiebung des Einspritzbeginns in Richtung früh zu einer erhöhten Stickoxidemission. Für den vorliegenden instationären Fall speichern die Brennraumwände den aus der Vergangenheit kälteren Zustand und vermindern die Stickoxidemission derart, daß eine Verschiebung in Richtung früh zugelassen werden kann. Die Berücksichtigung der genannten zeitlichen Gradienten von Motordrehzahl, Motormomentsollwert etc. verbessert daher gegenüber herkömmlichen Dieselmotorsteuerungen das instationäre Betriebsverhalten von Dieselmotoren.

## Patentansprüche

1. Verfahren zur Steuerung der Kraftstoffeinspritzung bei einem Dieselmotor, bei dem
- Einspritzparameter in Abhängigkeit einer Gruppe von Eingangsgrößen eingestellt werden, die wenigstens die Motordrehzahl (nₘ) und den Sollwert des Motormoments (mₘ) enthält,
**dadurch gekennzeichnet, dass**
- für die Einstellung der Einspritzparameter Einspritzbeginn (t_{b}) und Einspritzdauer (t_{d}) zusätzlich zur Motordrehzahl (nₘ) und dem Motormomentsollwert als weitere Eingangsgröße der zeitliche Gradient des Motormomentsollwertes herangezogen wird.

2. Verfahren nach Anspruch 1,
**dadurch gekennzeichnet, daß**
die Einspritzparameter Einspritzbeginn (t_{b}) und Einspritzdauer (t_{d}) zusätzlich in Abhängigkeit des zeitlichen Gradienten wenigstens der Motordrehzahl eingestellt werden.

3. Verfahren nach Anspruch 1 oder 2, weiter
**dadurch gekennzeichnet, daß**
der zeitliche Gradient des Motormomentsollwertes und optional derjenige der Motordrehzahl entweder als direkte funktionale Größen den Einspritzbeginn (t_{b}) und die Einspritzdauer (t_{d}) oder die Höhe von Schwellwerten beeinflussen, bei deren Über- bzw. Unterschreitung die Einstellung des Einspritzbeginns und/oder der Einspritzdauer für eine feste oder variable Zeitspanne verändert wird.

## Claims

1. A process for controlling the fuel injection system in a diesel engine in which
- injection parameters are set dependent upon a group of input variables which include at least the engine speed (nₘ) and the reference engine torque value (mₘ),
**characterised in that**
- in addition to the engine speed (nₘ) and the reference engine torque value, the time gradient of the engine torque reference value is also used as a further input variable for setting the injection parameters start of injection (t_{b}) and duration of injection (t_{d}).

2. A process in accordance with claim 1,
**characterised in that**
the injection parameters start of injection (t_{b}) and duration of injection (t_{d}) are also set dependent upon the time gradient of at least the engine speed.

3. A process in accordance with claim 1 or 2, further
**characterised in that**
the time gradient of the reference engine torque value and optionally that of the engine speed influence either start of injection (t_{b}) and duration of injection (t_{d}) as direct functional variables or the level of threshold values which when exceeded/or fallen below modify the setting of the start of injection and/or the period of injection for a fixed or variable period.

## Revendications

1. Procédé pour la commande de l'injection de carburant dans un moteur diesel, dans lequel :
- les paramètres d'injection sont établis en fonction d'un groupe de valeurs d'entrée, qui inclut au moins la vitesse de rotation (nₘ) du moteur et la valeur de consigne du couple moteur (mₘ),
**caractérisé en ce que**
- pour établir les paramètres d'injection que sont le commencement (t_{b}) de l'injection et la durée (t_{d}) de l'injection on utilise, en supplément à la vitesse de rotation (nₘ) du moteur et à la valeur de consigne du couple moteur, le gradient temporel de la valeur de consigne du couple moteur à titre de valeur d'entrée supplémentaire.

2. Procédé selon la revendication 1, **caractérisé en ce que** les paramètres d'injection que sont le commencement (t_{b}) de l'injection et la durée (t_{d}) sont établis en supplément au moins en fonction du gradient temporel de la vitesse de rotation du moteur.

3. Procédé selon l'une ou l'autre des revendications 1 et 2, **caractérisé en outre en ce que** le gradient temporel de la valeur de consigne du couple moteur et en option celui de la vitesse de rotation du moteur influence(nt) le commencement de l'injection (t_{b}) et la durée de l'injection (t_{d}) à titre de valeur fonctionnelle directe, ou bien influence(nt) la hauteur de valeurs seuil telles que le réglage du commencement de l'injection et/ou de la durée d'injection est modifié pour une période fixe ou variable lors du passage au-dessus ou au-dessous de ces valeurs seuil.
